(19)

**Europäisches Patentamt**
**European Patent Office**
**Office européen des brevets**

(11) **EP 2 998 078 A1**

(12) **EUROPEAN PATENT APPLICATION**

(43) Date of publication:
**23.03.2016 Bulletin 2016/12**

(51) Int Cl.:
***B25J 9/16*** *(2006.01)*

(21) Application number: **15184976.7**

(22) Date of filing: **14.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.09.2014 US 201414489991**

(71) Applicant: **Siemens Industry Software Ltd.**
**7019900 Airport City (IL)**

(72) Inventors:
- **HAZAN, Moshe**
  **4083918 Elad (IL)**
- **EMBON, Lisandro**
  **Waltham, MA Massachusetts 02451 (US)**
- **MADVIL, Rahav**
  **7523409 Rishon Lezion (IL)**

(74) Representative: **Isarpatent**
**Patentanwälte Behnisch Barth Charles**
**Hassa Peckmann & Partner mbB**
**Friedrichstrasse 31**
**80801 München (DE)**

(54) **METHOD FOR IMPROVING EFFICIENCY OF INDUSTRIAL ROBOTIC ENERGY CONSUMPTION AND CYCLE TIME BY HANDLING ORIENTATION AT TASK LOCATION**

(57) Methods for improving efficiency of industrial robotic energy consumption (156) and cycle time (158) by handling location orientation. A method includes receiving a complex operation (152) including a plurality of task locations (200), generating a plurality of joint configurations (620) of a simulated robot (154) for each one of the plurality of task locations (200), wherein each of the plurality of joint configurations (620) contains a plurality of candidate orientations (710), determining an optimal joint configuration (650) for each task location (200) that provides a lowest summation of the movement ratings (640) for the complex operation (152), wherein the movement ratings (640) incorporate an energy consumption (156) and a cycle time (158) for each of a plurality of robotic movements (425) for the complex operation (152), determining an optimal candidate orientation (715) for each of the optimal joint configurations (650) at each task location (200) that provides a lowest summation of the movement ratings (640) for the complex operation (152), returning the optimal candidate orientations (715) for each of the optimal joint configurations (650).

*FIG. 8*

```
┌─────────────────────────────┐
│  RECEIVE COMPLEX OPERATION  │──805
└─────────────────────────────┘
                │
                ▼
┌─────────────────────────────┐
│ GENERATE JOINT CONFIGURATIONS│──810
└─────────────────────────────┘
                │
                ▼
┌─────────────────────────────┐
│   DETERMINE OPTIMAL JOINT    │──815
│ CONFIGURATIONS PROVIDING LOWEST│
│ SUMMATION OF MOVEMENT RATINGS│
└─────────────────────────────┘
                │
                ▼
┌─────────────────────────────┐
│  DETERMINE OPTIMAL CANDIDATE │──820
│ ORIENTATIONS PROVIDING LOWEST│
│ SUMMATION OF MOVEMENT RATINGS│
└─────────────────────────────┘
                │
                ▼
┌─────────────────────────────┐
│  RETURN THE OPTIMAL CANDIDATE│──825
│         ORIENTATIONS         │
└─────────────────────────────┘
```

EP 2 998 078 A1

**Description**

CROSS-REFERENCE TO OTHER APPLICATION

This application shares some subject matter with commonly-assigned U.S. Patent Application 14/448,416 for "Method and Apparatus for Saving Energy and Reducing Cycle Time by Using Optimal Robotic Joint Configurations", which is hereby incorporated by reference.

TECHNICAL FIELD

The present disclosure is directed, in general, to automated industrial operations and robotics, and in particular to methods and systems for improving efficiency of industrial robotic energy consumption and cycle time by handling location orientation.

BACKGROUND OF THE DISCLOSURE

Product data management (PDM) systems manage product lifecycle management (PLM) systems and other data. Improved systems are desirable.

SUMMARY OF THE DISCLOSURE

Various disclosed embodiments include methods for improving efficiency of industrial robotic energy consumption and cycle time by handling location orientation. A method includes receiving a complex operation including a plurality of task locations, generating a plurality of joint configurations of a simulated robot for each one of the plurality of task locations, wherein each of the plurality of joint configurations contains a plurality of candidate orientations, determining a joint configuration for each task location that provides a lowest summation of the movement ratings for the complex operation, wherein the movement ratings incorporate an energy consumption and a cycle time for each of a plurality of robotic movements for the complex operation, determining a candidate orientation for each of the joint configurations at each task location that provides a lowest summation of the movement ratings for the complex operation, returning the candidate orientations for each of the joint configurations.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 illustrates a block diagram of a data processing system in which an embodiment can be implemented;

Figure 2 illustrates a task location with different orientations for a simulated robot in accordance with disclosed embodiments;

Figure 3 illustrates generating candidate orientations based upon the reachability of a simulated robot for different orientations at a task location in accordance with disclosed embodiments;

Figure 4 illustrates a directed acyclic graph (DAG) with vertices for the plurality of candidate orientations within the reachable range of the simulated robot for each location in accordance with disclosed embodiments;

Figure 5 illustrates candidate orientations in configuration groups based on reachability for different joint configurations of the simulated robot in accordance with disclosed embodiments;

Figure 6A illustrates a DAG with a plurality of joint configuration at each task location in accordance with disclosed embodiments;

Figure 6B illustrates a DAG with simulated collisions during robotic movements in accordance with disclosed embodiments;

Figure 6C illustrates a DAG with the candidate orientations grouped without simulated collisions in accordance with disclosed embodiments;

Figure 6D illustrates a DAG of the optimal joint configurations for each task location that provides the lowest summation of movement ratings for the complex operation in accordance with disclosed embodiments;

Figure 7A illustrates a DAG of the plurality of candidate orientations from the configuration group of the joint configuration for each task location that provides the lowest summation of movement rating for the complex operation in accordance with disclosed embodiments;

Figure 7B illustrates a DAG the optimal candidate orientations for each joint configuration at each task location that provides the lowest summation of the movement ratings in accordance with disclosed embodiments; and

Figure 8 illustrates a flowchart of a process for improving efficiency of industrial robotic energy consumption and cycle time bye handling location orientation in accordance with disclosed embodiments.

DETAILED DESCRIPTION

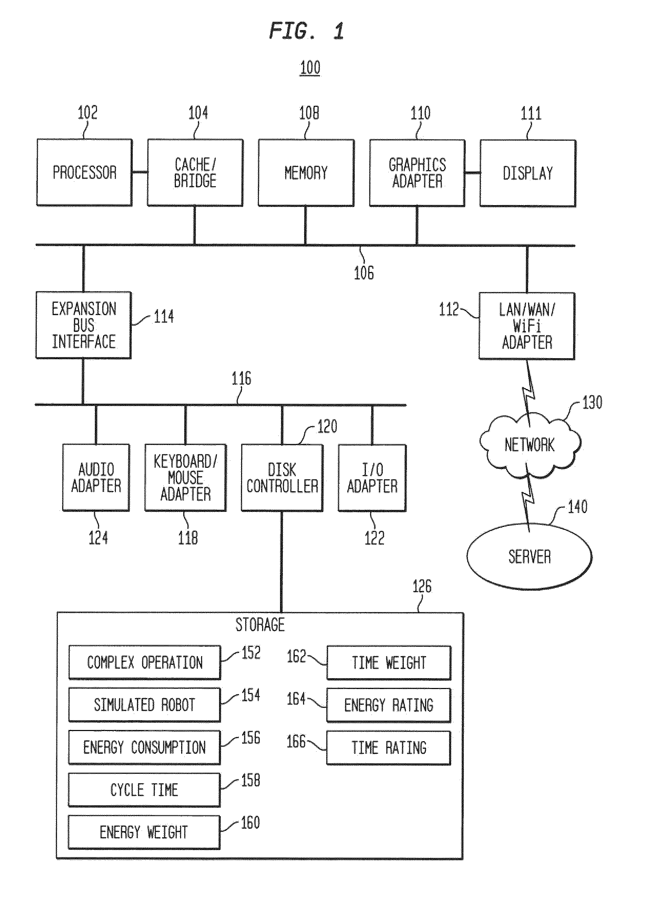

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Computer-aided robotics (CAR) tools are widely used for robotic arm path planning for spot welding. The planned path, generally, contains no more than several dozens of locations spread in its target area, based on part to be welded. The robotic operation should complete all the welds by reaching each one of them from a specific direction in order to avoid the robotic arm or welder colliding with the products or fixture elements.

The order of completing all the welds impacts the manufacturing process time and energy consumption. As the number of welds required by the robotic operation increases, the process of determining the most efficient orientation for each location becomes more tedious. The chosen path tends to become more arbitrary as the amount of welding location increases, which in turn raise the likelihood that the path chosen is not the most time or energy efficient. For example, when the process has twenty welding locations, 2,432,902,008,176,640,000 different permutations exist. Adding additional factors such as different orientations within a reachable range increases the amount of permutations.

Consideration of numerous additional constraints makes increases the difficulty in finding the optimal orientations for a complex operation. Additional constraints can include whether the robot can reach all locations from a given robot position and whether any collisions occur with the robot and any objects within its environment. A limited cycle time for completing tasks is another constraint that relates to production costs.

Robots can be heavy power consumers. Robots work repeatedly on one or more tasks for long hours and have complex powertrains that can include engines, transmissions, and so on. In a typical production line, there can be many robots, which further amplifies these issues.

Embodiments according to the disclosure find the most efficient or optimal orientations based on given constraints and in terms of energy consumption and cycle time. The energy to time correlation can include ratings and rankings of the results of simulations that calculate energy consumption values and cycle time values.

Applying this approach on every robot in a production line reduces the energy consumption and cycle time resulting in reduced production costs. The reduced production costs come from finding optimal location orientation for each robot in the production line to reduce overall energy consumption and cycle time.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (*e.g.* WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices. The storage 126 stores the complex operation 152, the simulated robot 154, the energy consumption 156, the cycle time 158, the energy weight 160, the time weight 162, the energy rating 164, the time rating 166, and so on, which are described below.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

The complex operation 152 is a simulated representation of the process a robot performs. The complex operation 152 is received from a variety of sources including, for example, over the network 130, from an external storage device, or manually entered by the user. The complex operation 152 is comprised of a series of tasks in which the robot completes.

The simulated robot 154 performs the complex operation 152 in the simulation. The simulated robot 154 is generated to function similarly to the actual robot performing the process.

The simulation program calculates the energy consumption 156 and cycle time 158 for robotic movements of the simulated robot 154. The energy consumption 156 is the amount of energy consumed by the robot determined by the robotic simulation. The cycle time 158 is the amount of time the robot takes to complete a cycle determined by the robotic simulation. In this embodiment, the energy consumption 156 and cycle time 158 are determined between each task location.

The system determines the energy weight (EW) 160 and the time weight (TW) 162. Each of the EW 160 and the TW 162 can be constant or based on a combination of values including the energy consumption 156 and the cycle time 158 via a formula. In this embodiment, the EW 160 formula defines the weight of the energy consumption 156 on the ratings and the TW 162 formula defines the weight of the cycle time 158 on the ratings.

The system determines an energy rating (ER) 164 and a time rating (TR) 166 based on the EW 160, the TW 162, the energy consumption 156, and the cycle time 158. In certain embodiments, the ER 164 and the TR 166 can be determined via equations (1) and (2), respectively:

$$ER = \frac{f_{EW}}{f_{EW} + f_{TW}} \qquad (1)$$

$$TR = \frac{f_{TW}}{f_{EW} + f_{TW}} \qquad (2)$$

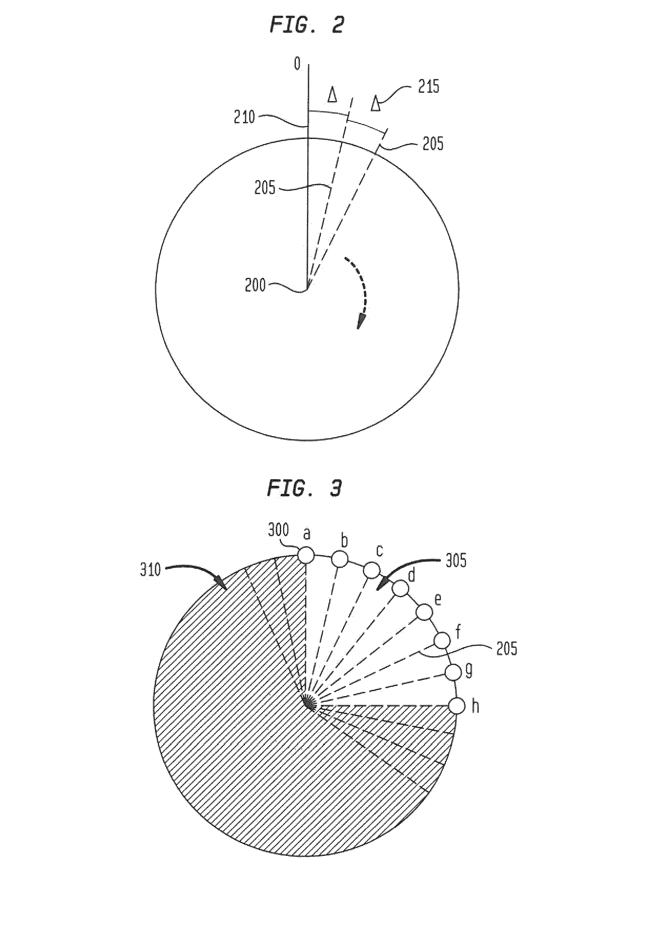

Figure 2 illustrates a task location 200 with different orientations 205 for a simulated robot in accordance with disclosed embodiments.

Task locations 200 are locations in a complex operation where a task, such as welding, cutting, soldering, etc. is performed by the robot. In a three-dimensional (3D) work space, the task can be performed at a number of different orientations 205 of the simulated robot. For testing the efficiency of the robot, orientations 205 are tested at each task location 200. The orientations 205 tested can be chosen by a number of different methods including randomly choosing orientations 205, rotation by an angle 215, or any other suitable method.

In certain embodiments, a normal axis 210 is defined and the orientations 205 are selected based on rotation around the task location 200 from the normal axis 210 by an angle 215. The normal axis 210 works as a reference for consistency of the separation of the orientations 205. The normal axis 210 can be an orientation 205. The angle 215 can be chosen based on complexity of the process, processing time, or any other determination of an angle 215. While only two instances of orientations 205 are illustrated, many instances of orientations 205 exist around the task location 200.

Figure 3 illustrates generating candidate orientations 300 based upon the reachability of a simulated robot for different orientations 205 at a task location in accordance with disclosed embodiments.

Complex operations require the robot to perform many tasks. In order to perform a task at the task location, the robot must be able to reach the task location. The system simulates the robot at the orientations 205 to determine the reachability. The orientations 205 which the simulated robot can reach the task location define the reachable region 305 and the orientations 205 which the simulated robot cannot reach the task location define the unreachable region 310. The orientations 205 within the reachable region 305 are then further defined as candidate orientations 300. Although only one reachable region 305 and one unreachable region 310 are illustrated, multiples of both regions can exist due to obstructions, collisions or any other situation which causes the robot to not reach the task location at an orientation 205.

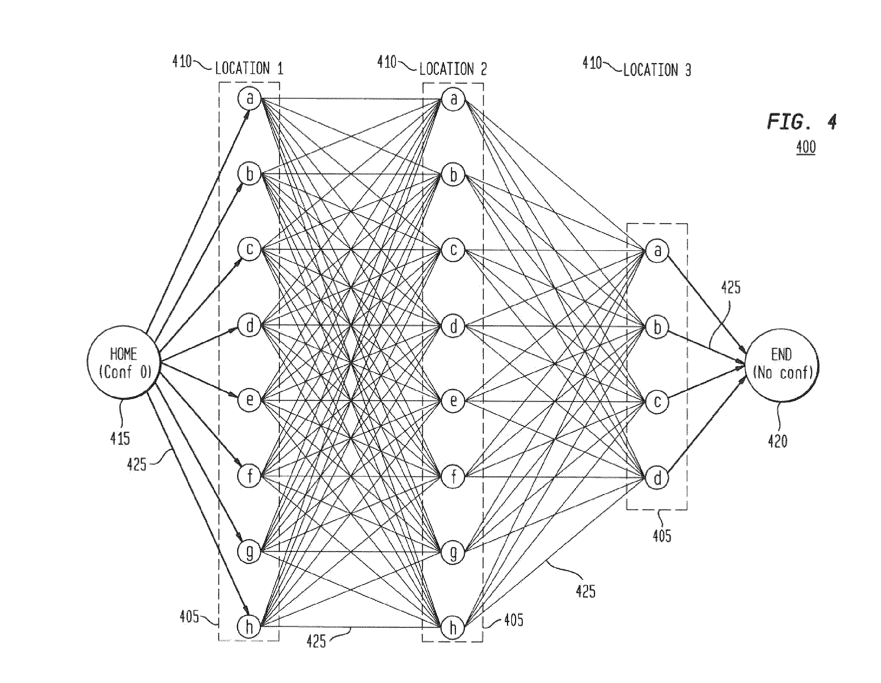

Figure 4 illustrates a DAG 400 with vertices for the plurality of candidate orientations 405 within the reachable range of the simulated robot for each location 410 in accordance with disclosed embodiments.

DAG 400 illustrates the different iterations a robot can complete the complex operation with a plurality of candidate orientations 405 at each location 410. The locations 410 can be task locations. The DAG 400 begins with a home 415 vertex and finishes with an end 420 vertex.

The home 415 is the initial robot position in the complex operation with the initial configuration. The home 415 could be the first task location, located at the end 420 of the previous process, or any other suitable location. In the illustrated embodiment, the home 415 is defined with no configuration. The end 420 is the final robot position in the complex operation with the final configuration. In the illustrated embodiment, the end 420 is defined with no configuration.

The edges between vertices serve as a representation of the robotic movements 425 of the robots in the DAG 400. The robotic movements 425 illustrate the amount of iterations to complete the DAG 400 or the complex operation. Each robotic movement 425 consumes a different amount of energy and completes the motion in a different amount of time. While the ER, the TR, the EW and the TW are normally constant across the DAG, each robotic movement can also have a unique ER, TR, EW and TW.

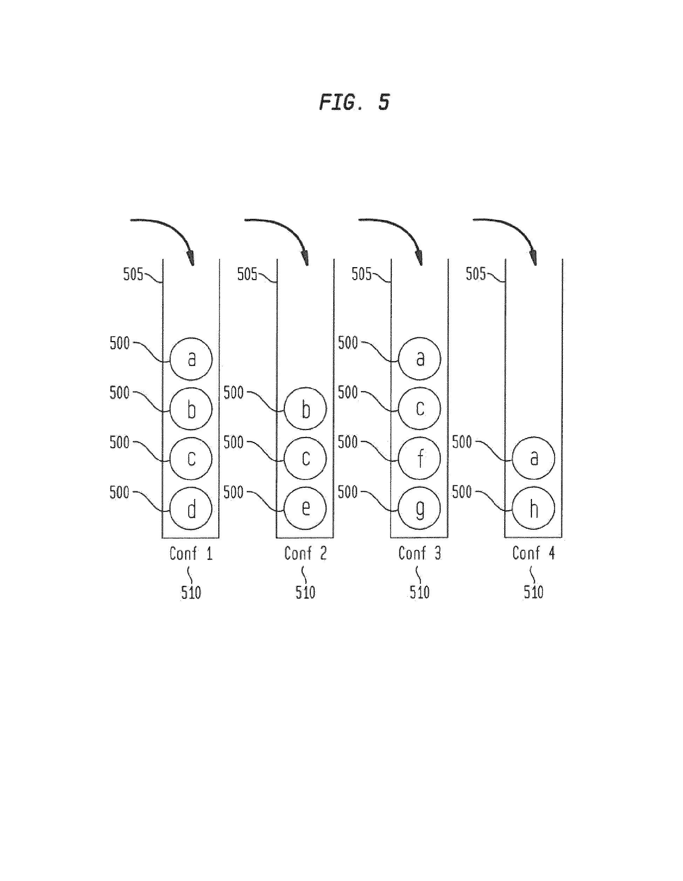

Figure 5 illustrates candidate orientations 500 in configuration groups 505 based on reachability for different joint configurations 510 of the simulated robot in accordance with disclosed embodiments.

The reachability is tested for each joint configuration 510 and the candidate orientations 500 are included in the configuration group 505 where the orientation is determined to be within the reachable range. As illustrated, candidate orientations 500 can be included in a single configurations group 505 or multiple configuration groups 505. A candidate orientation not found in any group will be retested for reachability to determine if another unreachable range exists.

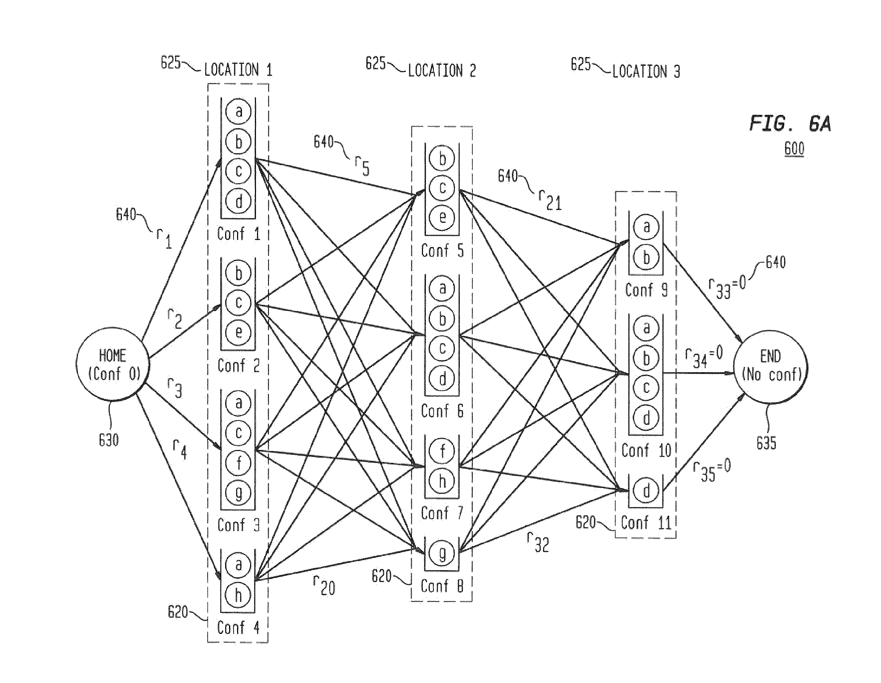

Figures 6A-6D illustrate DAGs for determining a joint configuration for each task location that provides a lowest summation of movement ratings for the robotic movements for completing the complex operation. Figure 6A illustrates a DAG 600 with a plurality of joint configurations 620 at each location 625 in accordance with disclosed embodiments;

The DAG 600 includes a home 630 vertex, multiple locations 625 each including a plurality of joint configurations 620 vertices, and an end 635 vertex.

The system determines a movement rating ($r_i$) 640 based on one or more of the ER, the TR, the EW, the TW, the cycle time, and the energy consumption. In certain embodiments, the movement rating ($r_i$) 640 is determined via equation (3):

$$r_i = \frac{W_i \cdot ER}{\sum_{k=0}^{n} W_i} + \frac{t_i \cdot TR}{\sum_{k=0}^{n} t_i} \qquad (3)$$

where $r_i$ is the movement rating 640 of the robotic movement, $W_i$ is the energy consumption for the robotic movement (i), $t_i$ is cycle time for the robotic movement (i), and n is the total number of robotic movements.

In this embodiment, the end 635 is actually not a real task location, but a dummy location, so DAG 600 will be closed and can be resolved by DAG algorithms. Since it is a dummy location, no robotic movement takes place and therefore a '0' movement rating 640 is applied.

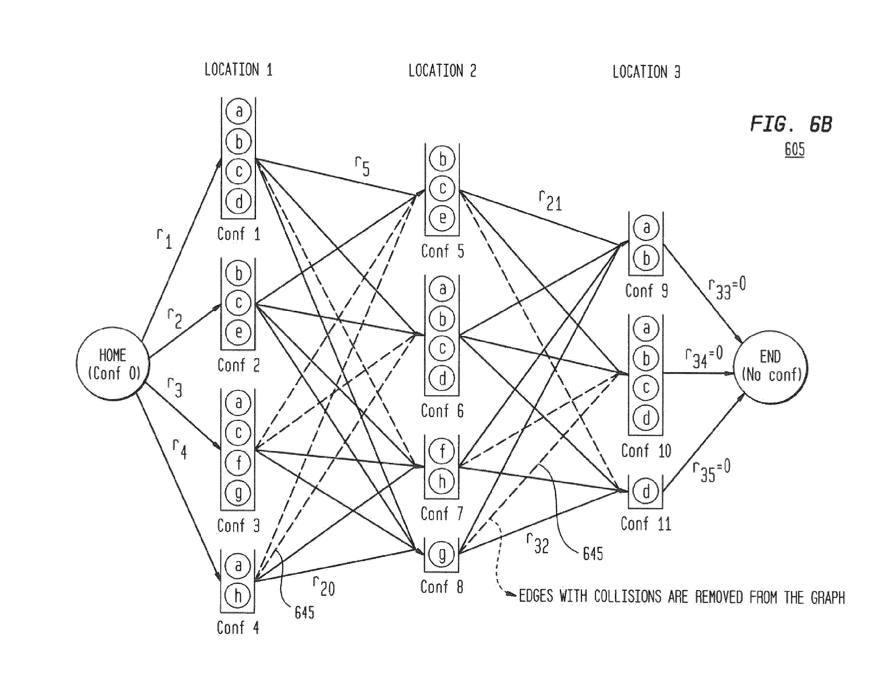

Figure 6B illustrates a DAG 605 with simulated collisions 645 during robotic movements in accordance with disclosed embodiments.

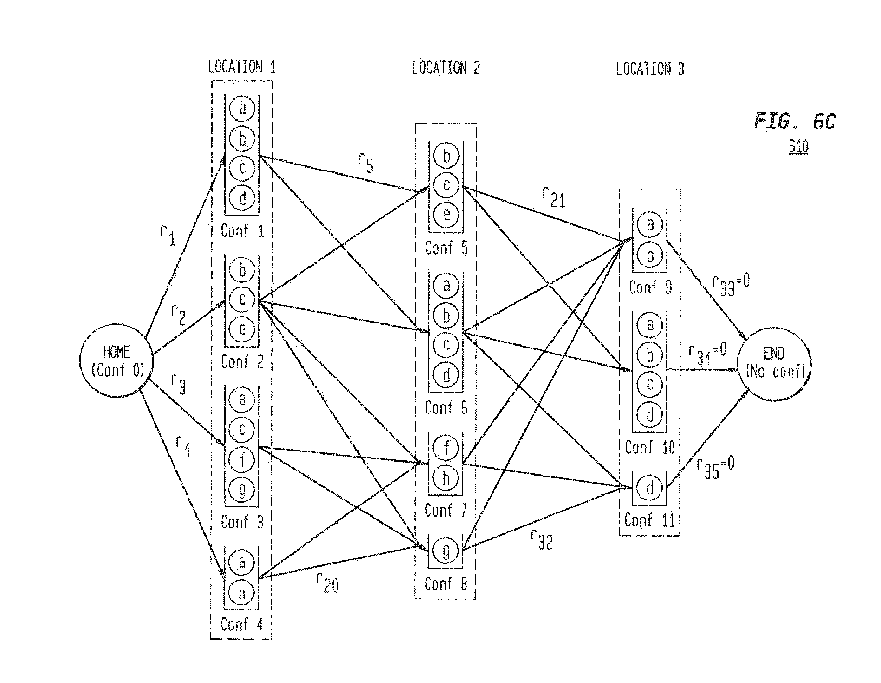

While running the simulation for each robotic movement, the system also determines if the simulation includes a simulated collision 645 and adjusts the robotic movement to remove one or more simulated collisions 645. If the system cannot adjust the robotic movement to remove the one or more simulated collisions 645, the system removes the robotic movement edge from the DAG 605 that contain collision events between the joint configurations of consecutive task locations. In certain embodiments, the simulated collisions 645 are removed by the system altering the robotic movement between joint configurations of consecutive task locations when simulated collisions 645 are detected. Figure 6C illustrates a DAG 610 with the candidate orientations grouped without simulated collisions in accordance with disclosed embodiments.

The robotic movement can be altered by adding one or more flyby or additional non-task locations, changing the candidate orientation of the task location, and so on. Flyby locations are described, for example, in U.S. Patent Publication 2011/0153080 A1, which is hereby incorporated by reference.

When adding flyby locations, the DAG 605 is changed (a new task location is added - the flyby) and the movement ratings of edges are recalculated. Note that adding a flyby location for a robotic movement, where a collision is detected, does not necessarily add that flyby location to other robotic movements between similar locations, whether or not a collision is detected. Robotic movements could contain unique flyby locations between locations when a simulated collision 645 is detected. Different flyby locations can be added for different robotic movements between similar consecutive locations.

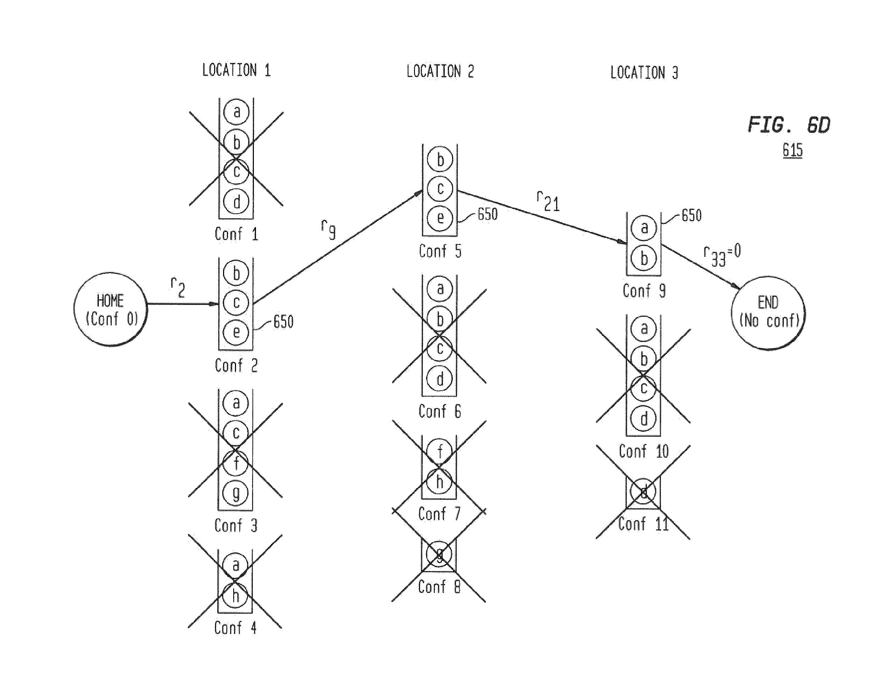

Figure 6D illustrates a DAG 615 of the optimal joint configurations 650 for each task location that provides the lowest summation of movement ratings for the complex operation in accordance with disclosed embodiments.

In some embodiments, the movement ratings for each robotic movement between joint configurations for each task location to calculate a lowest summation of movement ratings for the complex operation based on the energy consumption ($W_i$), the cycle time ($t_i$), the ER, the TR, and the $r_i$. The optimal joint configuration 650 for each task location produces the lowest summation of movement ratings.

where (n) is the number of robotic movements and:

$$R = \sum_{i=0}^{n} r_i = 1 \qquad (4)$$

so that the sum of all normalized edge ratings ($r_i$) is equal to 1.

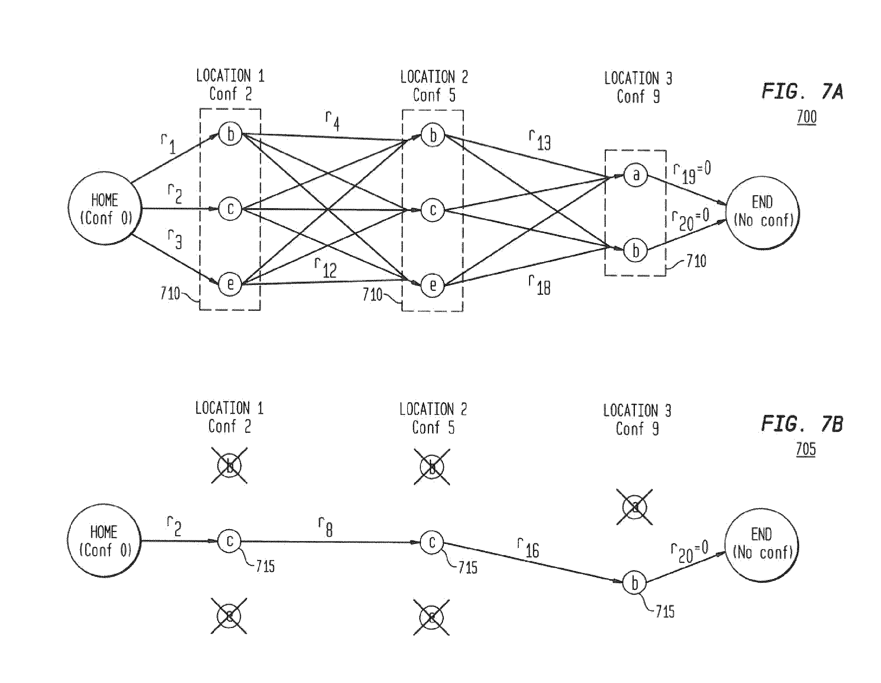

Figure 7A illustrates a DAG 700 of the plurality of candidate orientations from the configuration group of the joint configuration for each task location that provides the lowest summation of movement rating for the complex operation in accordance with disclosed embodiments.

DAG 700 includes a home vertex, a plurality of candidate orientations 710 based on the candidate orientation included with the configuration group of the joint configurations from DAG 615 (illustrated in Figure 6D), and an end vertex.

Figure 7B illustrates a DAG 705 the optimal candidate orientations 715 for each joint configuration at each task location that provides the lowest summation of the movement ratings in accordance with disclosed embodiments.

In some embodiments, the movement ratings for each robotic movement between candidate orientations for each task location to calculate a lowest summation of movement ratings for the complex operation based on the energy consumption ($W_i$), the cycle time ($t_i$), the ER, the TR, and the $r_i$. The optimal candidate orientation 715 for each joint configuration produces the lowest summation of movement ratings.

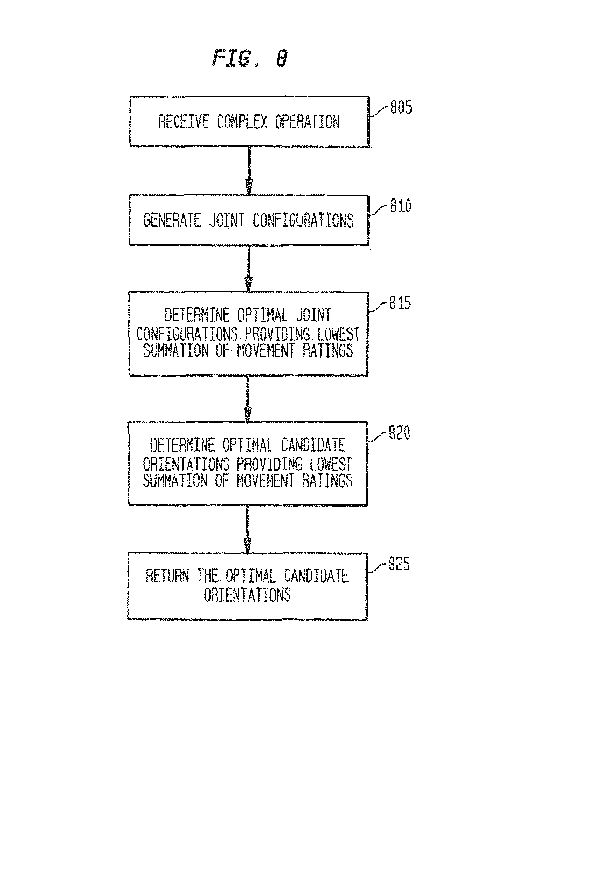

Figure 8 illustrates a flowchart of a process for improving efficiency of industrial robotic energy consumption and cycle time bye handling location orientation in accordance with disclosed embodiments.

In step 805, the system receives the complex operation. The complex operation can include any information required for the robot to complete the process, for example, the home, the task locations, the method of choosing the change in orientation, and any other operation information. Receiving, as used herein, can include retrieving from storage, receiving from another device or process, receiving via an interaction with a user, or otherwise.

In step 810, the system generates a plurality of joint configurations of a simulated robot for each one of the plurality of task locations. Each of the plurality of joint configurations contains a plurality of candidate orientations.

In step 815, the system determines an optimal joint configuration for each task location that provides a lowest summation of movement ratings for the complex operation. The movement ratings incorporate energy consumption and a cycle time for each of a plurality of robotic movements for the complex operations. The joint configurations can represent vertices on a DAG to determine a plurality of paths to complete the complex operation. Edges representing the robotic movement between task locations connect the vertices and have movement ratings to compare the efficiencies. Adding the movement ratings together along a path from the home to the end gives an overall rating for the path. Once all the path iterations of the DAG are calculated, the optimal joint configurations for the path with the best rating are determined by the system.

In step 820, the system determines an optimal candidate orientation for each of the optimal joint configurations at each task location that provides a lowest summation of the movement ratings for the complex operation. The candidate orientations from the optimal joint configurations are then used as vertices in a separate DAG with a home and an end. The movement ratings for the different paths in the DAG are added together for the system to determine the optimal candidate orientations at each task location for the best path.

In step 825, the system returns the optimal candidate orientation. Returning, as used herein, can include writing to storage, transmitting to another device or process, transmitting via an interaction with a user, or otherwise.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle.

FURTHER EMBODIMENTS

1. A method for improving efficiency of industrial robotic energy consumption (156) and cycle time (158) by handling location orientation, the method performed by a data processing system (100) and comprising:

receiving a complex operation (152) including a plurality of task locations (200);
generating a plurality of joint configurations (620) of a simulated robot (154) for each one of the plurality of task locations (200), wherein each of the plurality of joint configurations (620) contains a plurality of candidate orientations (710);

determining an optimal joint configuration (650) for each task location (200) that provides a lowest summation of movement ratings (640) for the complex operation (152), wherein the movement ratings (640) incorporate an energy consumption (156) and a cycle time (158) for each of a plurality of robotic movements (425) for the complex operation (152);

determining an optimal candidate orientation (715) for each of the optimal joint configurations (650) at each task location (200) that provides a lowest summation of the movement ratings (640) for the complex operation (152);

returning the optimal candidate orientations (715) for each of the optimal joint configurations (650) for the complex operation (152).

2. The method of embodiment 1, further comprising:

removing candidate orientations (300) in an unreachable range (310).

3. The method of embodiment 1, further comprising:

removing robotic movements (425) when a simulated collision (645) occurs.

4. The method of embodiment 1, further comprising:

calculating an energy consumption (156) and a cycle time (158) for the plurality of robotic movements (425) between consecutive task locations (200).

5. The method of embodiment 4, further comprising:

calculating an energy weight (160) and a time weight (162) based on the energy consumption (156), and the cycle time (158) for the plurality of robotic movements (425).

6. The method of embodiment 5, further comprising:

calculating an energy rating (164) and a time rating (166) based on the energy consumption (156), the cycle time (158), the energy weight (160), and the time weight (162) for the plurality of robotic movements (425).

7. The method of embodiment 6, further comprising:

calculating the movement rating (640) based on one or more of the energy consumption (156), the cycle time (158), the energy weight (160), the time weight (162), the energy rating (164), and the time rating (166) for the plurality of robotic movements (425).

8. A data processing system (100) comprising:

a processor (102); and
an accessible memory (108), the data processing system (100) particularly configured to:
receive a complex operation (152) including a plurality of task locations (200);
generate a plurality of joint configurations (620) of a simulated robot (154) for each one of the plurality of task locations (200), wherein each of the plurality of joint configurations (620) contains a plurality of candidate orientations (710);
determine an optimal joint configuration (650) for each task location (200) that provides a lowest summation of movement ratings (640) for the complex operation (152), wherein the movement ratings (640) incorporate an energy consumption (156) and a cycle time (158) for each of a plurality of robotic movements (425) for the complex operation (152);
determine an optimal candidate orientation (715) for each of the optimal joint configurations (650) at each task location (200) that provides a lowest summation of the movement ratings (640) for the complex operation (152);
return the optimal candidate orientations (715) for each of the optimal joint configurations (650) for the complex operation (152).

9. The data processing system (100) of embodiment 8, further comprising:

remove candidate orientations (300) in an unreachable range (310).

10. The data processing system (100) of embodiment 8, further comprising:

remove robotic movements (425) when a simulated collision (645) occurs.

11. The data processing system (100) of embodiment 8, further comprising:

calculate an energy consumption (156) and a cycle time (158) for the plurality of robotic movements (425) between consecutive task locations (200).

12. The data processing system (100) of embodiment 11, further comprising: calculate an energy weight (160) and a time weight (162) based on the energy consumption (156), and the cycle time (158) for the plurality of robotic movements (425).

13. The data processing system (100) of embodiment 12, further comprising:

calculate an energy rating (164) and a time rating (166) based on the energy consumption (156), the cycle time (158), the energy weight (160), and the time weight (162) for the plurality of robotic movements (425).

14. The data processing system (100) of embodiment 13, further comprising:

calculate the movement rating (640) based on one or more of the energy consumption (156), the cycle time (158), the energy weight (160), the time weight (162), the energy rating (164), and the time rating (166) for the plurality of robotic movements (425).

15. A non-transitory computer-readable medium encoded with executable instructions that, when executed, cause one or more data processing systems (100) to:

receive a complex operation (152) including a plurality of task locations (200);
generate a plurality of joint configurations (620) of a simulated robot (154) for each one of the plurality of task locations (200), wherein each of the plurality of joint configurations (620) contains a plurality of candidate orientations (710);
determine an optimal joint configuration (650) for each task location (200) that provides a lowest summation of movement ratings (640) for the complex operation (152), wherein the movement ratings (640) incorporate an energy consumption (156) and a cycle time (158) for each of a plurality of robotic movements (425) for the complex operation (152);
determine an optimal candidate orientation (715) for each of the optimal joint configurations (650) at each task location (200) that provides a lowest summation of the movement ratings (640) for the complex operation (152);
return the optimal candidate orientations (715) for each of the optimal joint configurations (650) for the complex operation (152).

16. The computer-readable medium of embodiment 15, further comprising:

remove candidate orientations (300) in an unreachable range (310).

17. The computer-readable medium of embodiment 15, further comprising:

remove robotic movements (425) when a simulated collision (645) occurs.

18. The computer-readable medium of embodiment 15, further comprising:

calculate an energy consumption (156) and a cycle time (158) for the plurality of robotic movements (425) between consecutive task locations (200).

19. The computer-readable medium of embodiment 18, further comprising:

calculate an energy weight (160) and a time weight (162) based on the energy consumption (156), and the cycle time (158) for the plurality of robotic movements (425).

20. The computer-readable medium of embodiment 19, further comprising:

calculate an energy rating (164) and a time rating (166) based on the energy consumption (156), and the cycle time (158), the energy weight (160), and the time weight (162) for the plurality of robotic movements (425).

**Claims**

1. A method for improving efficiency of industrial robotic energy consumption (156) and cycle time (158) by handling location orientation, the method performed by a data processing system (100) and comprising:

receiving a complex operation (152) including a plurality of task locations (200);
generating a plurality of joint configurations (620) of a simulated robot (154) for each one of the plurality of task locations (200), wherein each of the plurality of joint configurations (620) contains a plurality of candidate orientations (710);
determining an optimal joint configuration (650) for each task location (200) that provides a lowest summation of movement ratings (640) for the complex operation (152), wherein the movement ratings (640) incorporate an energy consumption (156) and a cycle time (158) for each of a plurality of robotic movements (425) for the complex operation (152);
determining an optimal candidate orientation (715) for each of the optimal joint configurations (650) at each task location (200) that provides a lowest summation of the movement ratings (640) for the complex operation (152);
returning the optimal candidate orientations (715) for each of the optimal joint configurations (650) for the complex operation (152).

2. The method of claim 1, further comprising:

removing candidate orientations (300) in an unreachable range (310).

3. The method according to any of the preceding claims, further comprising:

removing robotic movements (425) when a simulated collision (645) occurs.

4. The method according to any of the preceding claims, further comprising:

calculating an energy consumption (156) and a cycle time (158) for the plurality of robotic movements (425) between consecutive task locations (200).

5. The method of claim 4, further comprising:

calculating an energy weight (160) and a time weight (162) based on the energy consumption (156), and the cycle time (158) for the plurality of robotic movements (425).

6. The method of claim 5, further comprising:

calculating an energy rating (164) and a time rating (166) based on the energy consumption (156), the cycle time (158), the energy weight (160), and the time weight (162) for the plurality of robotic movements (425).

7. The method of claim 6, further comprising:

calculating the movement rating (640) based on one or more of the energy consumption (156), the cycle time (158), the energy weight (160), the time weight (162), the energy rating (164), and the time rating (166) for the plurality of robotic movements (425).

8. A data processing system (100) comprising:

a processor (102); and
an accessible memory (108), the data processing system (100) particularly configured to:

receive a complex operation (152) including a plurality of task locations (200);

generate a plurality of joint configurations (620) of a simulated robot (154) for each one of the plurality of task locations (200), wherein each of the plurality of joint configurations (620) contains a plurality of candidate orientations (710);

determine an optimal joint configuration (650) for each task location (200) that provides a lowest summation of movement ratings (640) for the complex operation (152), wherein the movement ratings (640) incorporate an energy consumption (156) and a cycle time (158) for each of a plurality of robotic movements (425) for the complex operation (152);

determine an optimal candidate orientation (715) for each of the optimal joint configurations (650) at each task location (200) that provides a lowest summation of the movement ratings (640) for the complex operation (152);

return the optimal candidate orientations (715) for each of the optimal joint configurations (650) for the complex operation (152).

**9.** The data processing system (100) of claim 8, further comprising:

remove candidate orientations (300) in an unreachable range (310).

**10.** The data processing system (100) of claim 8 or 9, further comprising:

remove robotic movements (425) when a simulated collision (645) occurs.

**11.** The data processing system (100) of any of the claims 8 to 10, further comprising:

calculate an energy consumption (156) and a cycle time (158) for the plurality of robotic movements (425) between consecutive task locations (200).

**12.** The data processing system (100) of claim 11, further comprising:

calculate an energy weight (160) and a time weight (162) based on the energy consumption (156), and the cycle time (158) for the plurality of robotic movements (425).

**13.** The data processing system (100) of claim 12, further comprising:

calculate an energy rating (164) and a time rating (166) based on the energy consumption (156), the cycle time (158), the energy weight (160), and the time weight (162) for the plurality of robotic movements (425).

**14.** The data processing system (100) of claim 13, further comprising:

calculate the movement rating (640) based on one or more of the energy consumption (156), the cycle time (158), the energy weight (160), the time weight (162), the energy rating (164), and the time rating (166) for the plurality of robotic movements (425).

**15.** A non-transitory computer-readable medium encoded with executable instructions that, when executed, cause one or more data processing systems (100) to perform a method according to any of the claims 1 to 7.

## FIG. 1

<u>100</u>

## FIG. 2

## FIG. 3

*FIG. 4*
400

# FIG. 5

FIG. 6A
600

FIG. 6B
605

FIG. 6C
610

*FIG. 6D*
615

LOCATION 1
Conf 2

LOCATION 2
Conf 5

LOCATION 3
Conf 9

FIG. 7A

$\underline{700}$

$r_1$  $r_2$  $r_3$  $r_4$  $r_{12}$  $r_{13}$  $r_{18}$  $r_{19}=0$  $r_{20}=0$

HOME
(Conf 0)

END
(No conf)

710

LOCATION 1
Conf 2

LOCATION 2
Conf 5

LOCATION 3
Conf 9

FIG. 7B

$\underline{705}$

HOME
(Conf 0)

$r_2$  $r_8$  $r_{16}$  $r_{20}=0$

715

END
(No conf)

EP 2 998 078 A1

## FIG. 8

RECEIVE COMPLEX OPERATION — 805

GENERATE JOINT CONFIGURATIONS — 810

DETERMINE OPTIMAL JOINT CONFIGURATIONS PROVIDING LOWEST SUMMATION OF MOVEMENT RATINGS — 815

DETERMINE OPTIMAL CANDIDATE ORIENTATIONS PROVIDING LOWEST SUMMATION OF MOVEMENT RATINGS — 820

RETURN THE OPTIMAL CANDIDATE ORIENTATIONS — 825

## EUROPEAN SEARCH REPORT

Application Number

EP 15 18 4976

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/088763 A1 (HAZAN MOSHE [IL]) 27 March 2014 (2014-03-27) * paragraphs [0005], [0007], [0040] - [0042], [0044] - [0046], [0049] - [0051]; figures 1,2,6,7 * ----- | 1-15 | INV. B25J9/16 |
| A | ALESSANDRO GASPARETTO ET AL: "Trajectory Planning in Robotics", MATHEMATICS IN COMPUTER SCIENCE, SP BIRKHÃ USER VERLAG BASEL, BASEL, vol. 6, no. 3, 30 August 2012 (2012-08-30) , pages 269-279, XP035125437, ISSN: 1661-8289, DOI: 10.1007/S11786-012-0123-8 * page 270, last paragraph - page 271, paragraph first * * page 272, paragraph 4 * * Section 5, Minimum Energy Algorithms; page 275 * ----- | 1-15 | |

|  | TECHNICAL FIELDS SEARCHED (IPC) |
|---|---|
|  | B25J G05B |

The present search report has been drawn up for all claims

| Place of search | Date of completion of the search | Examiner |
|---|---|---|
| The Hague | 12 February 2016 | Salvador, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 4976

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2016

| Patent document cited in search report | Publication date | Patent family member(s) | Publication date |
|---|---|---|---|
| US 2014088763 A1 | 27-03-2014 | EP 2900434 A1 <br> US 2014088763 A1 <br> WO 2014052286 A1 | 05-08-2015 <br> 27-03-2014 <br> 03-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 448416 A

- US 20110153080 A1